Europäisches Patentamt

European Patent Office

Office européen des brevets

(19)

(11) Publication number: **0 499 759 A1**

# EUROPEAN PATENT APPLICATION

(21) Application number: **91430005.8**

(22) Date of filing: **21.02.91**

(51) Int. Cl.⁵: **G01F 1/66, G01F 1/74**

(43) Date of publication of application:
**26.08.92 Bulletin 92/35**

(84) Designated Contracting States:
**FR**

(71) Applicant: **BP CHEMICALS S.N.C.**
**Tour Neptune la Défense 1, 20, Place de Seine**
**F-92400 Courbevoie(FR)**
Applicant: **THE BRITISH PETROLEUM COMPANY P.L.C.**
**Britannic House, 1 Finsbury Circus**
**London EC2M 9BA(GB)**

(72) Inventor: **Havas, Lazzlo,**
**BP Chemicals SNC,Sce Propriété industr.,**
**BP No 6**
**F-13117 Lavéra(FR)**
Inventor: **Belchamber, Ronald M., The British Petr.Co.p.l.c.**
**Chertsey Road**
**Sunbury-on-Thames, Middlesex TW16 7LN(GB)**
Inventor: **Collins, Michael P., The British Petr.Co.p.l.c.**
**Chertsey Road**
**Sunbury-on-Thames, Middlesex TW16 7 LN(GB)**

(74) Representative: **Hymers, Ronald Robson**
**c/o BP Chemicals S.N.C. Centre de Recherche, Service Propriété Industrielle BP No. 6**
**F-13117 Lavera(FR)**

(54) **Process for monitoring flow in a pneumatic conveying system.**

(57) A process for monitoring the flow of solid particles passing through a conduit 3 in a pneumatic conveying system comprises detecting the intensity of the stress waves within the wall of the conduit, by means of a transducer 6 coupled to the surface of the wall of the conduit, analysing the signal from the transducer and comparing the result to those obtained under known operating conditions such that when operating conditions repeat themselves they may be recognised or a change in operating conditions may be recognised. The process can provide a means for giving advance warning of a possible blockage or means for warning that a blockage has occurred. It can also give an indication of the mass of solid which is passing along the conduit.

FIG 1

EP 0 499 759 A1

The present invention relates to a process for monitoring the flow of solid particles passing through a conduit in a pneumatic conveying system and in particular to a process for monitoring the quantity of solid particles passing through the conduit.

The conveying velocity used in a pneumatic conveying system is often kept to a minimum in order to avoid damage to the solid particles being conveyed and to minimise energy consumption. If the conveying velocity falls below the saltation velocity for the solid particles, there is a risk that the conduit may become blocked. Blockage of the conduit may also occur for other reasons such as agglomeration of the solid particles, a change in the particle size distribution of the particles or an inadequate gas:solid ratio.

It has now been found that a pneumatic conveying system can be monitored by measuring the stress waves produced within the wall of the conduit conveying the solid particles.

Thus according to the present invention a process for monitoring the flow of solid particles through a conduit in a pneumatic conveying system, comprises the steps of:

(a) detecting the stress waves produced within the wall of the conduit conveying the solid particles, by means of a stress wave transducer coupled to the surface of the wall of the conduit, the output from the transducer being an analogue electrical signal, the intensity of which is proportional to the intensity of the stress waves,

(b) converting the analogue signal to a digital signal,

(c) utilising the signal power as a signal descriptor and assigning this to a particular category of known operating conditions,

(d) again detecting the stress wave intensity of the conduit conveying the solid particles by means of the coupled stress wave transducer,

(e) converting the analogue signal to a digital signal,

(f) utilising the signal power as a signal descriptor and comparing this to the signal descriptors assigned to known operating conditions in (c), such that when operating conditions repeat themselves they may be recognised, or a change in operating conditions may be recognised.

Preferably, the process comprises detecting the intensity of the stress waves within the wall of the conduit conveying the solid particles at a frequency or range of frequencies greater than 20 kHz, more preferably greater than 30 kHz.

European Patent Application EP-A-0 317 322 discloses a method for monitoring the frequency of sound emitted by process plant and machinery during an operation and classifying the sounds produced under different conditions so that the sounds may be related to the conditions causing them. The method is said to be applicable to any type of machinery or process plant that generates sound during its operation. The specific examples disclosed in the European patent application disclose the application of the method to an electric pump and an industrial blender. In the specific examples of EP-A-0 317 322, a flat frequency response audio-microphone was used and a band-pass filter selected bands in the frequency range 50 Hz to 10 kHz. It is stated in the text of the European application that frequencies above 10 kHz may be removed to prevent aliasing and below 50 Hz to remove spurious low frequency signals. The inventors of the present invention have found that it is very difficult, if not impossible, to use the method disclosed in EP-A-0 317 322 to monitor the flow of solid particles passing through a conduit in a pneumatic conveying system because a distinctive audio signal of sufficient intensity cannot readily be distinguished from the background noise of an operating plant, particularly at frequencies in the range 50 Hz to 10 kHz.

The process according to the present invention provides a means for giving advance warning of a possible blockage or a means for giving an after-the-event alarm that a blockage has occurred.

If a pneumatic conveying system is being used to convey reactants or catalysts to a reactor it may be very important to know how much solid is being introduced into the reactor. However, it can be difficult to measure the quantity of solid being conveyed in such a system. Known methods of measuring the solid transferred by a pneumatic conveying system include measuring the quantity of solid added to the system by mounting the feed hopper on load cells and measuring the loss of weight or by using a volumetric dosing means. The use of a weighing system may require flexible connections to eliminate the effects of adjacent vessels. Such flexible connections may be undesirable under certain operating conditions. It can also be difficult to accurately measure small quantities of solid particles from a relatively heavy feed hopper. A weighing system may be difficult to install retrospectively. Systems which use a means for introducing the solids by volumetric measurement can be adequate for free flowing materials which pack easily and predictably, but may not be effective if the solid particles do not flow readily. Also the volumetric measuring means can become temporarily blocked or may not fill or empty correctly, thereby delivering an inadequate aliquot.

The process according to the present invention can also be used to give an indication of the mass of solid which is passing along a conduit in a pneumatic conveying system. A particular advantage of the process is that it is non-invasive.

It has been found that the process according to the present invention is particularly useful when the solids are introduced into the conveying system as pulses, i.e. separate aliquots. This can be achieved, for example, by using a device which adds the solids as aliquots determined by volume.

An example of the use of the process according to the present invention is the introduction into a reactor of solid particles comprising a catalyst or a component of a catalyst. In particular, the process has been used to monitor the introduction of a polymerization catalyst into a fluidized bed polymerization reactor.

The invention includes apparatus especially adapted for monitoring the flow of solids through a conduit of a pneumatic conveying system comprising:

(a) a stress wave transducer coupled to the surface of the wall of the conduit, the output from the transducer being an analogue electrical signal, the intensity of which is proportional to the intensity of the stress waves,

(b) means for converting the analogue signal to a digital signal and

(c) means for utilizing the signal power to obtain a measure of the quantity of solids passing through the conduit.

The stress wave transducers for use in the present invention are preferably capable of detecting stress waves at a frequency of at least 20 kHz. More preferably the frequency used is at least 30 kHz and a convenient upper frequency limit is 1000 kHz. They can be broad-band transducers operating over a range of frequencies or fixed frequency transducers. Suitable transducers include piezoelectric resonant transducers or laser probes. Fixed frequency transducers are relatively simple and in many applications will provide all the information required. Broad-band transducers are more expensive and more complicated to use but can provide much more information.

The fixed frequency transducers can be, for example, piezoelectric resonant transducers. The choice of peak frequency sensitivity for these transducers will depend on the application, i.e. it is influenced by the size and geometry of the part of the plant to which it is to be attached as well as the frequency characteristics of the background noise. The person skilled in the art will be able to select a suitable frequency on the basis of simple trial and error experiments. If necessary, the analogue electrical signal can be amplified. Optionally, as an additional safeguard against interference, the signal may be passed through a suitable filter, e.g. for a stress wave transducer operating at a peak frequency of about 200 kHz, a 100-350 kHz bandpass filter may be used. The analogue signal can be converted to a root-mean-square signal, digitised and then stored and analysed by a computer.

The digital record of the signal can be analysed by the known techniques of time series analysis. For example the power spectrum and the auto-correlation function of the signal can reveal changes in the signal which are due to changes in the flow of solid particles through the conduit. Techniques such as Kalman filtering can be used to extract real time process information from the signals. Details of suitable techniques are described, for example, in the text book: "The Analysis of Time Series: Theory and Practice" Chatfield C., Chapman and Hall, London 1975. Multivariate pattern recognition procedures and neural network processing can be used to further analyse and classify signal types. The principals of neural network processing are described, for example, in the text book "Neural Computing" Wasserman P.D., Van Nostrand Reinold, New York 1989.

If a broad-band transducer is used, the digital signal can be passed through digital band pass filters capable of selecting two or more frequency bands preferably above 20 kHz. The signal power in the selected frequency bands can then be used as signal descriptors which can be analysed using a multivariate pattern recognition procedure. Suitable multivariate statistical techniques include the known methods of principal component analysis (PC) and partial least squares (PLS). Details of suitable statistical techniques are described, for example, in the text books :-"MULTIVARIATE ANALYSIS", Wold, H., Academic Press, New York, 1966, Krishnaiah, P.R. (Ed) and "CHEMOMETRICS" Sharaf, M.A., Illman, D.L. and Kowalski, B.R., John Wiley and Sons Inc, New York, 1986, (Elving, P.J., Winefordner, J.D., and Kolthoff, I.M. (Eds)).

The process according to the present invention comprises initially analysing the signals obtained under known operating conditions and relating these signals to these operating conditions, perhaps by developing soft models. Then the data acquisition and analysis procedure is repeated and, using the previously developed relationships it is possible to recognise operating conditions when they repeat themselves or changes in operating conditions.

The transducers are coupled to the surface of the wall of the conduit which is being measured. For example, piezoelectric transducers can be coupled to the conduit using known coupling agents such as, for example, silicone grease or epoxy resin.

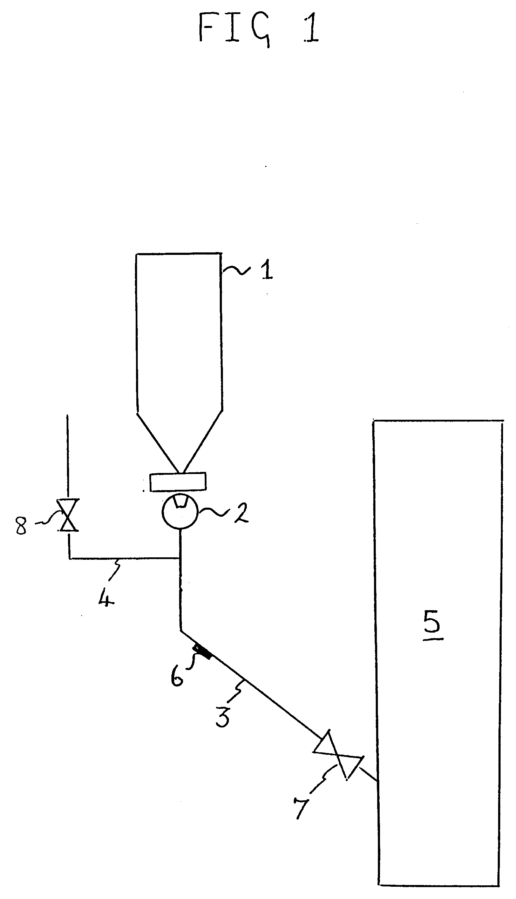

The process and apparatus according to the present invention are further described with reference to the accompanying drawing, Figure 1, which is a schematic representation of apparatus for feeding a polymerization catalyst into a fluidized bed polymerization reactor. Such apparatus is described, for example, in European Patent No. 214844.

The apparatus schematically illustrated in Figure 1 comprises a catalyst feed hopper (1) connected to a rotary valve (2) for introducing substantially equal volumes of catalyst into the pneumatic conveying conduit(3). The conveying gas is introduced via line (4) and carries the solid catalyst particles to the fluidized bed polymerization reactor (5). A stress wave transducer (6) is attached to the pneumatic conveying conduit (3). As far as possible, the stress wave transducer (6) is preferably positioned at a point on the pneumatic conveying conduit (3) where noise from process equipment does not adversely affect the signal obtained from the conduit (3). The stress wave transducer (6) can be connected directly to the surface of the wall of the conduit. A coupling agent such as silicone grease may be used to improve the signal. The conduits (3) and (4) have valves (7) and (8) respectively

The reactor (5) is operated under conditions which remain as constant as possible except for the feed rate of the catalyst. The signal from the stress wave transducer (6) and the mass balance over the reactor are used to develop soft models to characterise the signals recorded and to assign to them a particular quantity of solids passing through the conduit. Once the models have been prepared, the reactor can be operated normally and the signals from the stress wave transducer (6) used to obtain a measure of the solids passing through the conduit (3). The signal may be used to provide advance warning of a likely blockage, to warn that a blockage has occurred or to provide a measure of the quantity of catalyst added to the reactor. The catalyst may be the catalyst itself, a component of a catalyst system or a pre-polymer containing active catalyst.

The invention is illustrated by the following examples.

## Example 1

A catalyst injection system similar to that illustrated in Figure 1 was monitored using the process according to the present invention. The injection system is designed to introduce substantially equal aliquots of a catalyst prepolymer into the polymerization reactor (5) at predetermined intervals. The catalyst is fed from the catalyst feed hopper (1) via the rotary dosing valve (2) which volumetrically measures the catalyst and delivers it to the pneumatic transfer line (3) which is fed with nitrogen, as the conveying gas, from line (4). The stress wave transducer (6) was attached to the conduit (3).

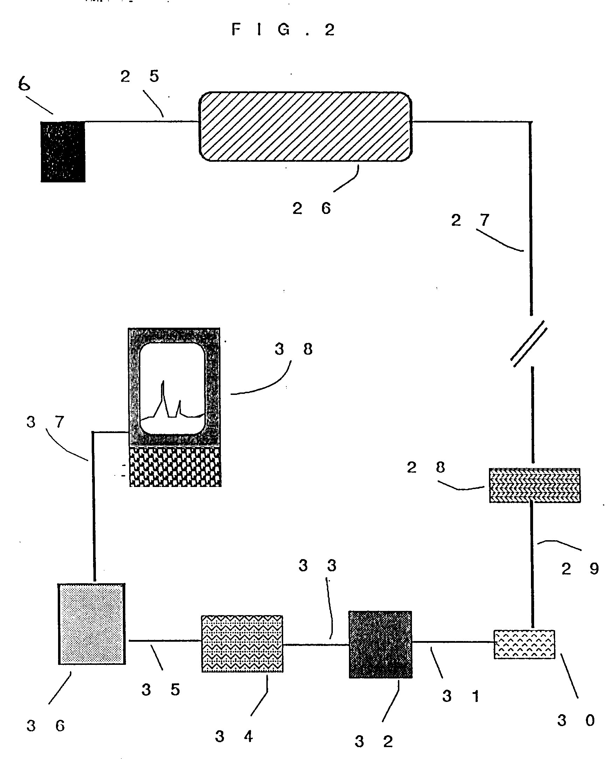

The apparatus for detecting and analysing the stress waves which was used is schematically illustrated in Figure 2 for the stress wave transducer (6) in Figure 1. The apparatus enabled the stress waves within the wall of the conduit (3) to be detected, amplified, converted to a root-mean-square signal, digitised, and stored and analysed by a computer. The system illustrated is one which can be used in areas requiring intrinsically safe equipment.

The stress wave transducer (6) was a piezoelectric resonant transducer with a centre frequency of 190 kHz. Such transducers are mechanically rugged and can be manufactured to satisfy the requirements of intrinsic safety. The stress wave transducer (6) was connected by a super-screened cable (25) to (26) a preamplifier supplying a gain of 34 dB and a band-pass filter which filtered the signal over the range 100 kHz-350 kHz. The preamplifier was housed in a plastic enclosure for mechanical protection and electrical isolation. The preamplifier body was earthed via the screen of a 50 ohm coaxial cable (27) leading back to the safe area. This screen also formed part of the shielding against electromagnetic noise. The coaxial cable (27) linked the preamplifier to a zener barrier interference unit (28). The interface unit limited the amount of energy that could enter the hazardous area under fault conditions by means of a triple zener diode clamping circuit.

The interface unit was connected via screened coaxial cable (29) to a line driver (30) which provided impedance matching and a further 6 dB of gain to the signal. The line driver (30) was connected via a screened coaxial cable (31) to a power unit (32) which provided 15 V dc power for the preamplifier and also served to decouple the ac signal. The ac signal was fed via a screened coaxial cable (33) to a root-mean-square average signal level (ASL) amplifier (34). This converted the high frequency (190 kHz) ac signal to an integrated signal. Provision was made on the circuit boards of the ASL amplifier (34) for adjustment of time constant and gain. The integrated signal from ASL amplifier (34) was fed via a twisted pair connection (35) to an eight channel programmable gain amplifier and analogue to digital convertor (36). The digital data was passed via a data bus (37) to a computer (38).

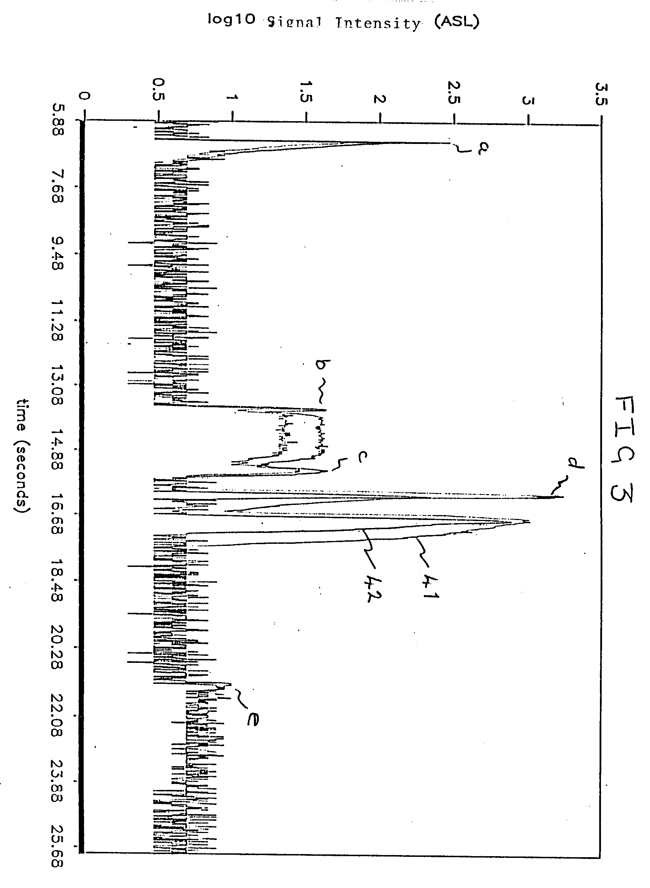

Examples of the analysed output from the stress wave transducer (6) recorded during the injection sequence are illustrated in Figure 3. The two traces (41 and 42) were recorded at two different differential pressures (5.5 and 2.0 bar gauge respectively) across the injection apparatus. Each feature in the traces corresponds to an identifiable operation in the injection sequence. The first peaks (a) correspond to the impact of a striking device against the feed hopper (1) to loosen the particles. The largest peaks (41 and 42) are caused by prepolymer flowing through the pneumatic conveying conduit (3) into the reactor. The peak (41) produced at the higher differential pressure is larger than the peak (42) produced at the lower differential pressure. Higher differential pressure across the injection apparatus would be expected to produce larger powder charges. The area under each the peak (41 and 42) is related to the total quantity of powder flowing through the conduit (3). The peaks at (b) correspond to the opening of the valve (8) in the nitrogen supply line (4) and the peaks at (c) correspond to the closing of this valve. The peaks at (d) correspond to the opening of the valve (7) in the pneumatic conveying conduit (3). The peaks at (e) correspond to the pressurization of the vessel supplying the nitrogen (not shown).

## Example 2

The process according to the present invention was used to monitor the flow of pulses of powder along a 6 mm internal diameter stainless steel tube. The powder used was a polyethylene prepolymer having a particle size of about 100 microns. The powder was introduced into the tube via a side arm and was conveyed along the tube by nitrogen. In order to minimise the signal due to the opening and closing of the valve in the line supplying the nitrogen a loop of tubing about 1.0 m long was used between the valve and the powder inlet side arm. A stress wave transducer was coupled to the external wall of the tube downstream of the powder inlet side arm. The transducer was a 150 kHz piezoelectric resonant transducer and was bonded to the wall of the tube using epoxy resin as a coupling agent. The transducer was connected to a 40 dB preamplifier which was in turn connected to a variable gain amplifier which was in turn connected to a root mean square (rms) to dc converter. The output from the rms:dc converter was sampled by a computer controlled analogue to digital converter and the data were recorded and analysed by a computer. The passage of a slug of powder past the transducer produced a peak in the signal.

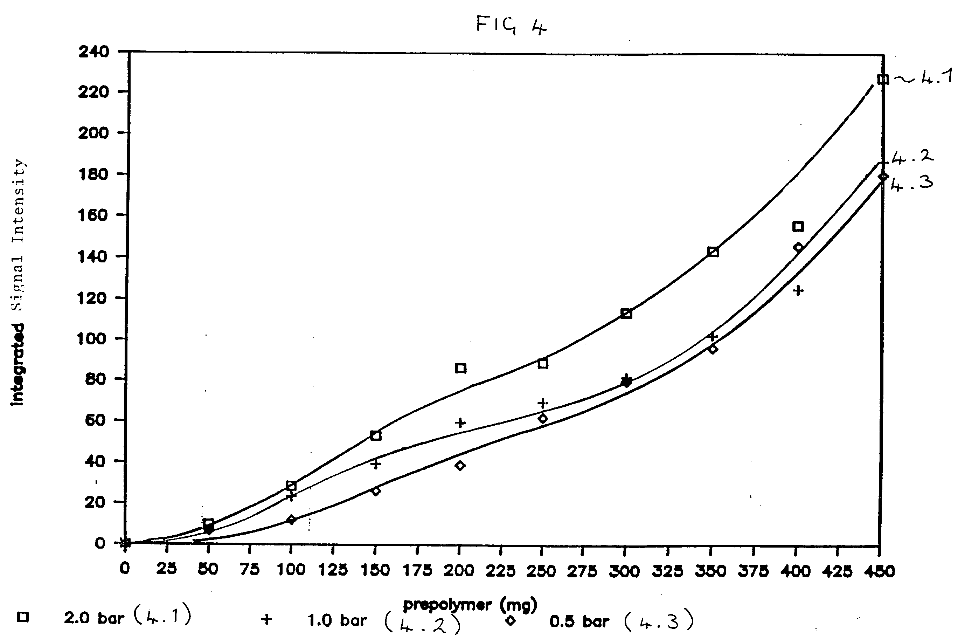

Figure 4 shows calibration curves of the areas under the peaks for pulses of powder up to 450 mg at three different differential pressures across the apparatus (traces 4.1, 4.2 and 4.3). It is apparent from Figure 4 that an increase in the weight of the powder or an increase in the differential pressure results in an increase in the signal from the transducer. Good repeatability was obtained and over a period of several days there was no systematic variation observed in the measured signals.

## Claims

1. A process for monitoring the flow of solid particles through a conduit in a pneumatic conveying system, comprises the steps of:

    (a) detecting the stress waves produced within the wall of the conduit conveying the solid particles, by means of a stress wave transducer coupled to the surface of the wall of the conduit, the output from the transducer being an analogue electrical signal, the intensity of which is proportional to the intensity of the stress waves,

    (b) converting the analogue signal to a digital signal,

    (c) utilising the signal power as a signal descriptor and assigning this to a particular category of known operating conditions,

    (d) again detecting the stress wave intensity of the conduit conveying the solid particles by means of the coupled stress wave transducer,

    (e) converting the analogue signal to a digital signal and

    (f) utilising the signal power as a signal descriptor and comparing this to the signal descriptors assigned to known operating conditions in (c), such that when operating conditions repeat themselves they may be recognised, or a change in operating conditions may be recognised.

2. A process as claimed in claim 1 in which the intensity of the stress waves within the wall of the conduit are detected at a frequency or a range of frequencies greater than 20 kHz.

3. A process as claimed in claim 1 or claim 2 in which the solid particles are introduced into the pneumatic conveying system as pulses by a device which introduces the solids as aliquots determined by volume.

4. A process as claimed in any one of claims 1 to 3 in which the solid particles comprise a catalyst or a component of a catalyst and the pneumatic conveying system is for feeding the catalyst or catalyst component into a reactor.

5. A process as claimed in any one of claims 1 to 4 in which the catalyst is a polymerization catalyst and the reactor is a fluidized-bed polymerization reactor.

6. Apparatus for monitoring the flow of solids through a conduit of a pneumatic conveying system comprising:

    (a) a stress wave transducer coupled to the surface of the wall of the conduit, the output from the transducer being an analogue electrical signal, the intensity of which is proportional to the intensity of the stress waves,

(b) means for converting the analogue signal to a digital signal and

(c) means for utilizing the signal power to obtain a measure of the quantity of solids passing through the conduit.

7. Apparatus as claimed in claim 6 in which the transducer is capable of detecting stress waves at a frequency of at least 20 kHz.

8. Apparatus as claimed in claim 6 or claim 7 in which the stress wave transducer is a piezoelectric resonant transducer coupled to the surface of the wall of the vessel by a coupling agent.

9. Apparatus as claimed in claim 6 or claim 7 in which the stress wave transducer is a broad band transducer coupled to the surface of the wall of the vessel by a coupling agent.

# FIG 1

F I G . 2

log10 Signal Intensity (ASL)

FIG 3

time (seconds)

FIG 4

European Patent
Office

**EUROPEAN SEARCH REPORT**

Application Number

EP 91 43 0005

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | SENSOR TECHNOLOGY vol. 6, no. 7, July 1990, page 5, Englewood, NJ, US; "Monitoring FLow of Powders" * the whole document * | 1,6 | G 01 F 1/66 G 01 F 1/74 |
| A | GB-A-2 132 761 (K.K. KOBE SEIKO SHO) * abstract; figures 3,4 * | 1,6 | |

TECHNICAL FIELDS SEARCHED (Int. Cl.5)

G 01 F
G 01 N

The present search report has been drawn up for all claims

| Place of search | Date of completion of the search | Examiner |
|---|---|---|
| BERLIN | 11-10-1991 | VORROPOULOS G |

EPO FORM 1503 03.82 (P0401)

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..............................................................................................
& : member of the same patent family, corresponding
    document